(19) Europäisches Patentamt / European Patent Office / Office européen des brevets

(11) **EP 1 942 654 A2**

(12) **EUROPEAN PATENT APPLICATION**

(43) Date of publication:
**09.07.2008 Bulletin 2008/28**

(51) Int Cl.:
***H04N 1/40*** *(2006.01)*

(21) Application number: **08100081.2**

(22) Date of filing: **03.01.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **05.01.2007 KR 20070001488**
**14.12.2007 KR 20070130572**

(71) Applicant: **Samsung Electronics Co., Ltd.**
**Suwon-si, Gyeonggi-do 442-742 (KR)**

(72) Inventor: **Woo, Hong Rok**
**Suwon-si,**
**Gyeonggi-do (KR)**

(74) Representative: **Walaski, Jan Filip et al**
**Venner Shipley LLP**
**20 Little Britain**
**London EC1A 7DH (GB)**

(54) **Apparatus and method for processing an image**

(57) An image forming apparatus and method outputs an image in a pure monochromatic colour as opposed to forming the monochromatic colour from a combination of colours. The image forming apparatus includes a controller to receive image data represented by a combination of red, green and blue data, among others, to determine whether the received image data are image data corresponding to a monochromatic colour, such as black, a converter to convert the image data into cyan, magenta, yellow, and black data, among other colour schemes, when the image data are image data corresponding to the monochromatic colour, a halftoning processor to compare colour information items of the converted cyan, magenta, yellow, and black data with colour information items in previously established halftone tables to output and store resultant values of cyan, magenta, yellow, and black, and an extractor to extract a resultant value of black, when the monochromatic colour is black, from among the stored resultant values of cyan, magenta, yellow, and black.

FIG. 1

**Description**

The present invention relates generally to an apparatus and method for processing an image. Particularly but not exclusively, the invention relates to an image forming apparatus to output a monochromatic colour image and a method thereof, and more particularly, to an image forming apparatus that, when received image data are in a monochromatic image format, outputs an image in a single colour, as opposed to using a combination of colours of a polychromatic image format, and a method thereof.

In general, a colour printer such as an inkjet printer prints a colour image onto a printable medium in accordance with image data transmitted from a host, such as a personal computer (PC).

The image data are typically generated by the host. When the generated image data are transmitted to a printer in a printer language, the printer represents the image in accordance with the image data by a combination of four printing colours composed of cyan (C), magenta (M), yellow (Y), and black (K).

When compressed image data of a colour raster graphic, such as a photograph, are input to a conventional printer, the original image data are represented by a combination of red (R), green (G), and blue (B).

Next, the image data represented by the combination of R, G, and B are converted into R', G', and B' to be suitable to the data format of the colour printer and the converted R', G', and B' data are then converted into image data composed of cyan, magenta, yellow, and black to output a colour image.

Chromatic image data in which a colour is represented by secondarily converting the original image data represented by the combination of R, G, and B can produce an image of a desired colour by the above-described conversion. A monochromatic image, such as a black on white image or a grayscale image, however, is provided to the image forming apparatus as a combination of same RGB values used in a colour image, and is not provided as data of the single colour itself. Thus, in the conventional techniques, monochromatic image data are output in an image as a combination of cyan, magenta, yellow, and black. Accordingly, the need has been recognized to output a monochrome image in a single colour corresponding to the monochromatic image format, even when the image data are provided to the image forming device as a combination of colours.

The present invention provides an image forming apparatus and concomitant methods to output monochromatic images using a single colour of the image forming apparatus, even when the image data themselves are provided as a combination of multiple colours.

Additional aspects and utilities of the present invention will be set forth in part in the description which follows and, in part, will be obvious from the description, or may be learned by practice of the invention.

The foregoing and/or other aspects and utilities of the present invention are achieved by providing a method for outputting a colour of an image forming apparatus. The method includes determining whether image data are monochromatic, converting the image data into cyan, magenta, yellow, and black data when the image data are monochromatic, comparing colour information of the converted cyan, magenta, yellow, and black data with colour information, which is previously set in halftone tables, to output and store resultant values of cyan, magenta, yellow, and black, and extracting a resultant value of black from among the generated resultant values of cyan, magenta, yellow, and black.

The values of red (R), green (G), and blue (B) in colour information items of the image data may be equivalent in determining that the image data are monochromatic.

In the comparing operation, the colour information of the converted cyan, magenta, yellow, and black data may be compared with the colour information set in the halftone table corresponding to black to output and store resultant values of cyan, magenta, yellow, and black.

In the extracting operation, the resultant values of cyan, magenta and yellow may be deleted from the generated resultant value of cyan, magenta, yellow and black to extract the resultant value of black.

The image data may be represented by combinations of red, green, and blue.

The foregoing and/or additional aspects and utilities of the present invention may also be achieved by providing an image forming apparatus including a controller to determine whether image data are monochromatic, a converter to convert the image data into cyan, magenta, yellow, and black data when the image data are monochromatic, a half-toning processor to compare colour information of the converted cyan, magenta, yellow, and black data with colour information which is previously set in halftone tables to output resultant values of cyan, magenta, yellow, and black, and an extractor to extract the resultant value of black from among the generated resultant values of cyan, magenta, yellow, and black.

The controller may compare values of red (R), green (G), and blue (B) of the image data, and determines that the image data are monochromatic when the R, G and B of the image data are equivalent.

The half-toning processor may compare colour information on the converted cyan, magenta, yellow, and black data with colour information, which is previously set in a halftone table corresponding to black, to generate resultant values of cyan, magenta, yellow, and black.

The extractor may delete the resultant values of cyan, magenta, and yellow from among the generated resultant values of cyan, magenta, yellow, and black to extract the resultant value of black.

The foregoing and/or other aspects and utilities of the present invention are also achieved by providing an image forming apparatus including a processor to generate resultant values of a plurality of colour data according to colour information items of the colour data and colour information items in reference halftone tables, and an extractor to extract a resultant value of black from among the resultant values of the colour data.

The foregoing and/or other aspects and utilities of the present invention are also achieved by providing an image processing apparatus including an image source to provide an image containing a plurality of colour information items respectively containing a colour of a first polychromatic image format, and a processor to determine if the image is in a monochromatic image format, and to render the image in a single colour of a second polychromatic image format upon a positive determination of the monochromatic image format.

The foregoing and/or other aspects and utilities of the present invention are also achieved by providing an image forming method including comparing colour information items of an image in a first polychromatic image format to determine whether the image is in a monochromatic image format, converting the colour information items into colour information items of a second polychromatic image format that includes a colour by which the monochromatic image format can be represented, removing colour information items of the second polychromatic image format other than that of the colour by which the monochromatic image format can be represented responsive to the determination that the image is in the monochromatic image format, and rendering the image with the remaining colour information items of the second polychromatic image format.

These and/or other aspects and utilities of the present invention will be more apparent from the following detailed description taken in conjunction with the accompanying drawings, in which:

FIG. 1 is a schematic block diagram of an image forming apparatus according to an exemplary embodiment of the present invention;

FIG. 2 illustrates colour information items of image data of a monochromatic colour image that are stored in a memory;

FIG. 3 illustrates colour information items on image data of a polychromatic colour image that are stored in a memory;

FIG. 4 illustrates resultant values obtained by comparing colour information items of cyan, magenta, yellow, and black data with colour information items in previously established halftone tables according to the present invention;

FIG. 5 illustrates resultant values obtained by comparing colour information items of cyan, magenta, yellow, and black data with colour information items in halftone tables previously established with respective colours according to the present invention; and

FIG. 6 is a flowchart illustrating compensation processes of the image forming apparatus according to the exemplary embodiment of the present invention.

FIG. 7 is a schematic block diagram of an image forming apparatus according to an exemplary embodiment of the present invention illustrating processing operations thereof.

Reference will now be made in detail to the embodiments of the present invention, examples of which are illustrated in the accompanying drawings, wherein like reference numerals refer to the like elements throughout. The embodiments are described below in order to explain the present invention by referring to the figures.

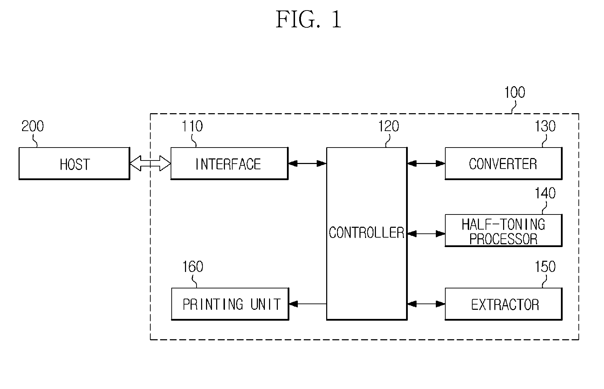

Referring to FIG. 1, there is illustrated an exemplary system configuration suitable to practise the present invention. The exemplary image forming apparatus 100 includes an interface 110 through which the image forming apparatus 100 may communicate with a host device 200, such as a computer, or an image or document scanning device. The communication between the host device 200 and the image forming apparatus 100 may include, but is not limited to, the conveyance of printer control commands, image processing commands and image data. The present invention is not limited by the hardware configuration and communication protocol used to embody the interface 110, and, as such, the implementation details of the interface 110 will be omitted in the interest of brevity.

The image forming apparatus 100 may be a printer, a multifunction image forming apparatus, etc. The image forming apparatus 100 may also be an image processing apparatus, such as a computer or a printer, to execute processing operations, such as those described below, to form images.

The image forming apparatus 100 may also include an output engine, such as exemplified by the printing unit 160, which publishes the output image as, for example, indicia on a printable medium, such as paper. The printing unit 160 may include electrical and mechanical hardware, chemicals, such as ink or toner, and a supply of the printable medium. The printing unit 160 is controlled, such as through a suitable control system, to cooperatively move the printable medium and the hardware used to apply the chemical so as to form the output image onto the medium. The present invention is not limited by the mechanisms used to embody the printing unit 160, the implementation details of which will be omitted for purposes of brevity.

The exemplary image forming apparatus 100 includes a controller 120 to direct the interoperation of the components of the image forming apparatus 100 and to process the image data, such as through the processing operations described below. The controller 120 may be a general purpose processor, such as a digital signal processor (DSP), may be a lightweight processor, such as an embedded processor, or may be an application specific processor. The present invention is not limited by the hardware configuration or instruction set architecture of the controller 120. Moreover, it is to be understood that while the controller 120 is illustrated as a single component, certain embodiments of the present invention include distributed processing implementations through multiple processing elements. For example, the controller 120 may be composed of a hardware controller to operate the hardware mechanism of the image forming apparatus 100, and a separate image processor, such as a DSP, to perform the image processing and rendering operations. The present invention is intended to embrace all such alternative implementations, and others that will be apparent to the skilled artisan upon review of this disclosure.

Although not illustrated, it is to be understood that the controller 120 may include persistent storage, such as through a flash memory, read-only memory (ROM) or magnetic or optical media, and may include volatile storage, such as through a random access memory (RAM), or may include a combination of both persistent and volatile memory. The storage in the controller 120 may also have multiple segments, such as a code memory to maintain processor instructions to be executed by controller 120 and constant data including static lookup tables, and data memory for storing data, such as images at varying stages of processing and processing data, such as variables and volatile lookup tables. The controller 120 may also include memory that is distributed across components, to include cache memory and pipeline memory.

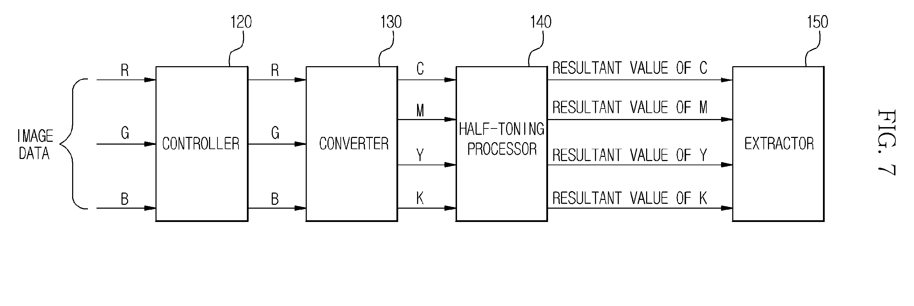

The exemplary image forming apparatus 100 includes a converter 130, a halftoning processor 140, and an extractor 150, which are described below with reference to FIG. 7, each of which may be in communication with the controller 120, and may be implemented as software modules executing on the same processor through which the controller 120 is implemented.

FIG. 7 is a functional block diagram of an image forming apparatus 100 to output an image in a single colour according to an exemplary embodiment of the present invention. As used herein, a "monochromatic" image format is a colour scheme of an image that includes only shades of a particular colour. A grayscale colour scheme is an example of such a monochromatic image format. A "polychromatic" image format is one that includes shades of a plurality of colours. For purposes of description and not limitation, the input image data will be in a polychromatic image format defined by, for example, the red, green, blue (RGB) colour space, and the output colour space of the image forming apparatus 100 is another polychromatic colour space, e.g., the cyan, magenta, yellow, black (CMYK) colour space. In the exemplary embodiment to be described presently, the output image will be output in a single colour, e.g., pure black (K) of the polychromatic image format defined by the CMYK colour space when it is determined from the polychromatic RGB input data that the input image is monochromatic, e.g., grayscale. The skilled artisan will readily recognize that the present invention can be extended to other colour spaces and single colour choices therein without departing from the scope thereof as defined by the claims.

As is illustrated in FIG. 7, the exemplary image forming apparatus 100 includes a controller 120, a converter 130, a halftoning processor 140, and an extractor 150, each of which will be described in detail below. It is to be understood that although the functional compartmentalization of FIG. 7 facilitates an understanding of the present invention through descriptions of the components of the illustrated exemplary embodiment, such configuration is not essential to practise the present invention. Elements other than those shown and described may be substituted therefor, functionality portrayed as carried out in multiple elements may be combined into a single component, and elements described as discrete may be distributed across multiple components. Indeed, numerous variations, alternatives and modifications will become apparent to the skilled artisan upon review of this disclosure.

The controller 120 obtains image data, such as in pixel values, each of which is assigned a combination of RGB values, to determine whether the received image data are image data of a monochromatic colour scheme. As used herein, a "colour information item" is a data object to maintain colour image data and that can be stored, retrieved, evaluated and modified by embodiments of the present invention. A structure in memory that can maintain the colour data of a pixel may serve as a colour information item, although numerous implementations of the colour information item may be used with the present invention.

In general, image data of a colour image include colour information items that define a colour by amounts of, for example, red (R), green (G), and blue (B).

The RGB information can be divided into three attributes of hue, brightness, and saturation. The hue is a characteristic defining what is perceived as colour, e.g., for RGB colour schemes, the hue is divided into R, G, and B. The brightness refers to a degree to which a colour is bright or dark, and the saturation refers to the purity of a colour.

In certain embodiments of the present invention, the controller 120 examines the colour information items to determine whether the RGB values are equivalent, in which case the controller 120 indicates to other components that the image data are in a monochromatic image format.

For example, colour information items may take on one of 256 steps such that the darkest black is assigned a value of "0" and that the brightest white is assigned a value of "255".

In certain embodiments of the present invention, the controller 120 determines the image data as being that of the monochromatic image format when the colour information items maintaining RGB values of the image data are equivalent.

For example, when colour information items of R, G, and B data are all assigned a value of "0" (R=0, G=0, and B=0), the image data are determined as image data corresponding to black. When colour information items on R, G, and B are all assigned a value of "255" (R=255, G=255, and B=255), the image data are determined as image data corresponding to white.

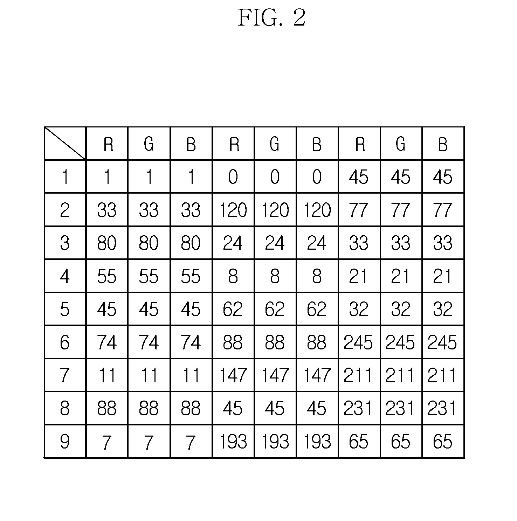

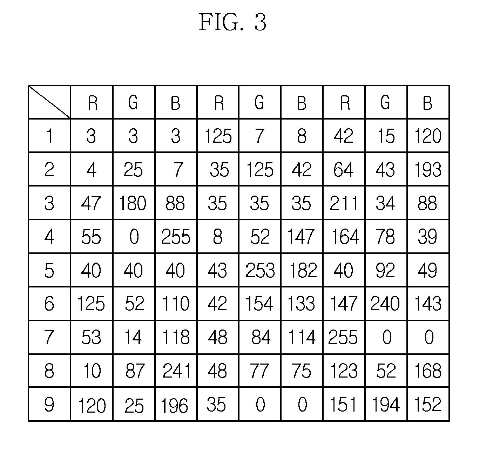

FIG. 2 illustrates colour information items of image data of a monochromatic image that are stored in memory. As illustrated in FIG. 2, colour information items corresponding to the colours R, G, and B are stored in memory. When colour information items of R, G, and B are equivalent, e.g., (1, 1, 1), (33, 33, 33), (231, 231, 231), and (65, 65, 65), the image data are determined as image data of a monochromatic colour scheme, and can thus be output in the single colour black. FIG. 3 illustrates image data for a colour image, where the differences between the colour image of FIG. 3 and the monochromatic image of FIG. 2 are readily apparent.

The exemplary converter 130 converts the image data into the colour format of the printer 160. In the illustrated embodiment, the output polychromatic image format uses combinations of cyan (C), magenta (M), yellow (Y), and black (K) to produce the output image.

In certain embodiments of the present invention, the cyan, magenta, yellow, and black data of a monochromatic image are obtained using the following formula: C(=M=Y=K)=255-R(=G=B)

For example, when the colour information items of an input image are equivalent, e.g., R=G=B=250, i.e., the data correspond to a monochromatic image format, the cyan, magenta, yellow, and black data are converted into equivalent cyan, magenta, yellow, and black data, i.e., the colour information items of the CMYK image format are each assigned a value of 5.

Once the image data are converted into cyan, magenta, yellow, and black data, the half-toning processor 140 compares colour information items of the converted cyan, magenta, yellow, and black data with colour information items in previously established halftone tables to output and store resultant values of cyan, magenta, yellow, and black. Such halftone tables may be created in accordance with a suitable halftone process and then stored in memory. The pre-established halftone tables may be created to set the level at which a value is output for a corresponding colour value, as will be apparent from the discussion in the paragraphs that follow.

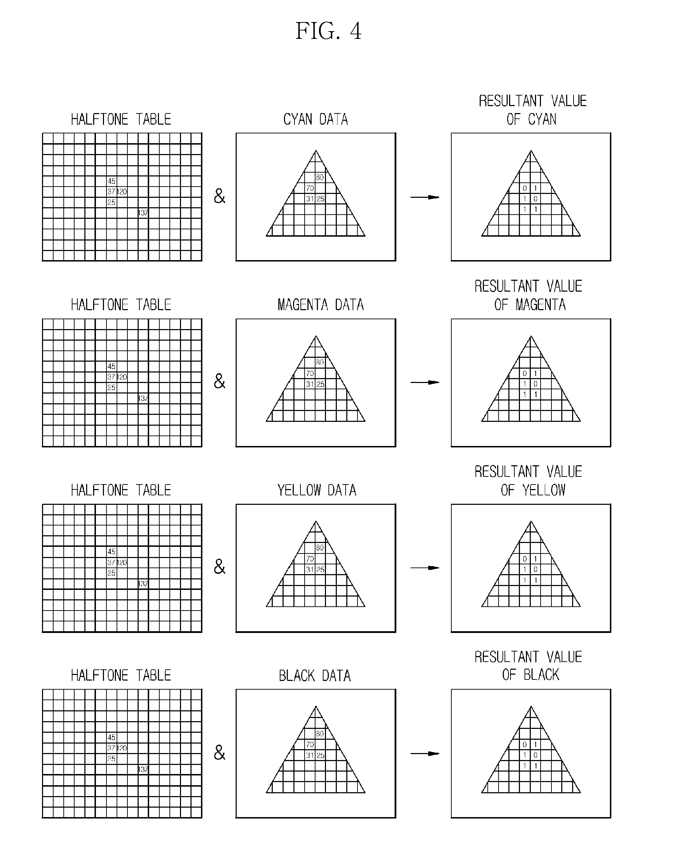

For example, FIG. 4 illustrates resultant values obtained by comparing converted colour information items of cyan, magenta, yellow, and black data with colour information items in a previously established halftone table according to the exemplary embodiment of the present invention. As illustrated in FIG. 4, colour information items of the cyan, magenta, yellow, and black data are compared with colour information items in the same previously established halftone tables to output resultant values of cyan, magenta, yellow, and black, respectively.

In the example of FIG. 4, the previously established halftone tables are each referred to a halftone table corresponding to black, since, in the example, it is assumed that the controller 120 has indicated that the image data correspond to a monochromatic image format.

Thus, the colour information items of the cyan, magenta, yellow, and black data are compared with the data stored in the same halftone table corresponding to the single colour of the output polychromatic image format, e.g., black, and the resultant values of cyan, magenta, yellow, and black are output as equivalent values.

The exemplary halftoning processor 140 compares colour information items of the converted cyan, magenta, yellow, and black data with colour information items in the previously established halftone tables to output and store a resultant value of "1" when it is determined colour information items of the cyan, magenta, yellow, and black data are greater than or equal to the colour information items in the halftone tables.

The output image data may be produced in units of pixels, represented by bit values in bytes assigned to the image and the resultant values are thus represented through binary values of "0" and "1" in order to represent the state of an output pixel. Therefore, when it is determined that colour information items of the cyan, magenta, yellow, and black data are greater than or equal to colour information items in the halftone tables, the resultant value of "1" is output. Thus, as stated above, the value in the halftone table defines the threshold level at which to assign a pixel an output value of "1."

The exemplary halftoning processor 140 compares colour information items of the converted cyan, magenta, yellow, and black data with colour information items in the previously established halftone tables to output the resultant value of "0" when it is determined that the colour information items of the cyan, magenta, yellow, and black data are less than colour information items in the halftone tables.

Then, the exemplary extractor 150 extracts the resultant value of the single colour of the polychromatic output image format, e.g., black, among the stored resultant values of cyan, magenta, yellow, and black, respectively.

That is, in order to output a single colour of a polychromatic image format, as opposed to using a combination of colours of the polychromatic image format, only the resultant value of the single colour, e.g., black is extracted from among the resultant values of cyan, magenta, yellow, and black.

In certain embodiments of the present invention, the resultant value of black is extracted by removing the resultant values of cyan, magenta, and yellow from the output image data.

The printing unit 160 may receive the image data of the resultant value of the single colour, e.g., black, from the controller 120 so that the image is output in a pure single colour scheme.

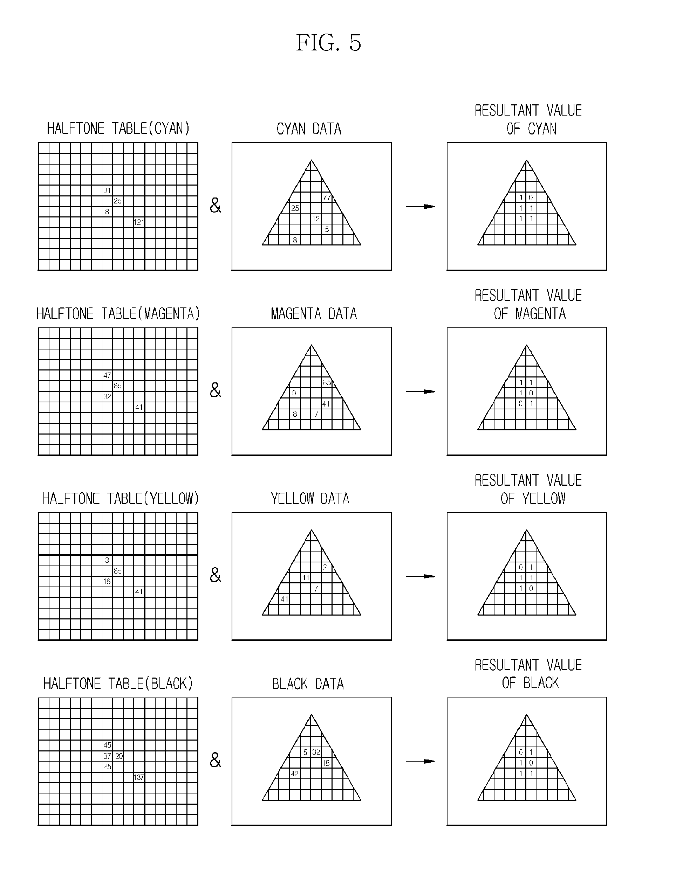

On the other hand, when the controller 120 determines that the image is a polychromatic image, such as that illustrated in FIG. 3, the resultant values are obtained by comparing colour information items of cyan, magenta, yellow, and black data with colour information items in halftone tables previously established with respective colours according to the present invention. As illustrated in FIG. 5, when the received image data are not image data of a monochromatic colour image, as determined by, for example, the controller 120, the converter 130 converts the image data into cyan, magenta, yellow, and black data and the half-toning processor 140 compares colour information items of the converted cyan, magenta, yellow, and black data with colour information items in halftone tables previously established with the respective colours to output and store the resultant values of cyan, magenta, yellow, and black, respectively.

To be specific, colour information items of the cyan data are compared with colour information items in the previously established halftone table corresponding to cyan to output and store the resultant value of cyan. Colour information items of magenta, yellow, and black are compared with colour information items on the previously established halftone tables corresponding to magenta, yellow, and black, respectively, to output and store the respective resultant values thereof.

Therefore, image data of a chromatic colour are output using the resultant values of cyan, magenta, yellow, and black that are stored in the memory and the output image is produced in accordance with the polychromatic colour scheme.

Hereinafter, exemplary compensation processes of an image forming apparatus suitably configured to practice the present invention will be described.

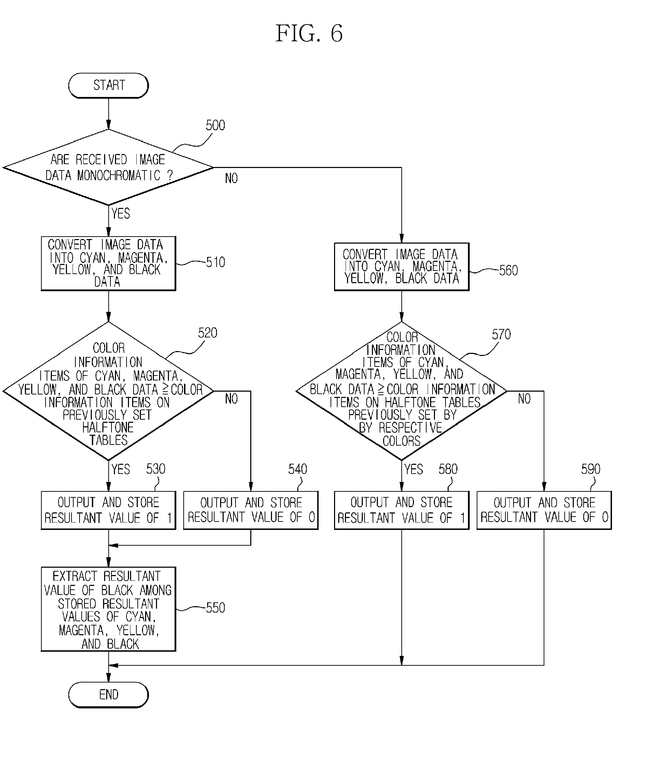

FIG. 6 is a flowchart illustrating a selective output image colour process of the image forming apparatus according to the exemplary embodiment of the present invention. At operation 500, image data represented by a combination of RGB colour values are obtained and it is determined whether the received image data are image data of a monochromatic image.

The RGB colour information items of the image data are examined, for example, by the controller 120, to determine if the assigned RGB values are equivalent with each other. As described above, when the RGB colour information items are the same, it is determined that the image data are that of a monochromatic image.

When the image data are determined to be monochromatic, the process transitions to operation 510, whereby the image data are converted into cyan, magenta, yellow, and black data, by, for example, the converter 130.

In the exemplary embodiment, the cyan, magenta, yellow, and black data are converted using the following formula:

$$C(=M=Y=K)=255\text{-}R(=G=B)$$

As described above, once the image data are converted into the cyan, magenta, yellow, and black data, the process transitions to operation 520, where colour information items of the converted cyan, magenta, yellow, and black data are compared with colour information items in the previously established halftone table of the single output colour to determine whether colour information items of the cyan, magenta, yellow, and black data are greater than or equal to the colour information items in the single colour halftone table, e.g., the black halftone table.

When it is determined that colour information items of the cyan, magenta, yellow, and black data are greater than or equal to colour information items in the single colour halftone table, the process transitions to operation 530, whereby the resultant value of "1" is output, by, for example, the halftoning processor 140, and stored in memory.

When it is determined that colour information items of the cyan, magenta, yellow, and black data are less than the colour information items in the halftone tables, the process transitions to operation 540, where the resultant value of "0" is output and stored.

The process may then transition to operation 550, where the resultant value of black is extracted from the stored resultant values of cyan, magenta, yellow, and black by, for example, the extractor 150.

In certain embodiments of the present invention, the resultant values of cyan, magenta, and yellow are deleted from the stored resultant values of cyan, magenta, yellow, and black to thereby leave only the resultant value of black remaining.

On the other hand, if it is determined at operation 500 that the image data are not that of a monochromatic image, the process transitions to operation 560, whereby the image data are converted into cyan, magenta, yellow, and black data by, for example, converter 130.

Once the image data are converted into the cyan, magenta, yellow, and black data, the process transitions to operation 570, whereby the colour information items of the converted cyan, magenta, yellow, and black data are compared with colour information items in the halftone tables previously established with the respective colours to determine whether colour information items of the cyan, magenta, yellow, and black data are greater than or equal to colour information items in the halftone tables.

When it is determined that colour information items on the cyan, magenta, yellow, and black data are greater than or equal to colour information items in the halftone tables, the process transitions to operation 580, whereby the resultant value of "1" is output by, for example, the halftoning processor 140, and stored in memory.

When it is determined that colour information items of the cyan, magenta, yellow, and black data are smaller than colour information items in the halftone tables, the process transitions to operation 590, whereby the resultant value of "0" is output and stored.

Certain embodiments of the present invention provide for the functional components to be manufactured, transported, marketed and/or sold as processor instructions encoded on computer-readable media. The present invention, when so embodied, can be practiced regardless of the processing platform on which the processor instructions are executed and regardless of the manner by which the processor instructions are encoded on the medium.

It is to be understood that the computer-readable medium may be any medium on which the instructions may be encoded and then subsequently retrieved, decoded and executed by a processor, including electrical, magnetic and optical storage devices, and wired, wireless, optical and acoustical communication channels. The computer readable medium may include either or both of persistent storage, referred to herein as "computer-readable recording media" and as spatiotemporal storage, referred to herein as "computer-readable transmission media". Examples of computer-readable recording media include, but not limited to, read-only memory (ROM), random-access memory (RAM), and other electrical storage; CD-ROM, DVD, and other optical storage; and magnetic tape, floppy disks, hard disks and other magnetic storage. The computer-readable recording media may be distributed across components, to include such distribution through storage systems interconnected through a communication network. The computer-readable transmission media may transmit encoded instructions on electromagnetic carrier waves or signals, or as acoustic signals through acoustically transmissive media.

Moreover, the processor instructions may be derived from algorithmic constructions of the present invention in various programming languages, the mere contemplation of which illustrates the numerous realizable abstractions of the present invention.

Although a few embodiments of the present invention have been illustrated and described, it will be appreciated by those skilled in the art that changes may be made in these embodiments without departing from the principles of the invention, the scope of which is defined in the appended claims.

As described above, a monochromatic image may be output by the image forming apparatus in accordance with the present invention in a single colour without combining multiple colours to produce the single colour. As a result, printing quality can be improved.

**Claims**

1. A method of processing an image, comprising:

   receiving image data in a first polychromatic image format;
   determining whether the image data is monochromatic; and
   in the event that the image data is monochromatic;
   converting the image data into data of a second polychromatic image format; and
   extracting data of a single colour of the second polychromatic image format to represent the image.

2. The method of claim 1, wherein data of the second polychromatic image format comprises cyan, magenta, yellow and black data, the method further comprising:

   comparing colour information of the converted cyan, magenta, yellow, and black data with predetermined colour information in halftone tables, to provide resultant values of cyan, magenta, yellow, and black; and
   extracting a resultant value of black from among the generated resultant values of cyan, magenta, yellow, and black.

3. The method as claimed in claim 2, wherein, in the comparing operation, the colour information of the converted cyan, magenta, yellow, and black data is compared with the colour information set in the halftone table corresponding to black to output and store resultant values of cyan, magenta, yellow, and black.

4. The method as claimed in claim 3, wherein, in the extracting operation, the resultant values of cyan, magenta and yellow are deleted from the generated resultant value of cyan, magenta, yellow and black to extract the resultant value of black.

5. The method as claimed in any one of the preceding claims, wherein data in the first polychromatic image format comprises is represented by combinations of red (R), green (G), and blue (B).

6. The method as claimed in claim 5, wherein, in the determining operation, values of red, green, and blue (RGB) in the image data are compared with each other, and the image data are determined as monochromatic when the RGB values are equivalent.

7. Apparatus for processing an image, comprising:

   means for receiving image data in a first polychromatic image format;
   means for determining whether the image data is monochromatic; and
   means for converting the image data into data of a second polychromatic image format in the event that the image data is monochromatic; and
   means for extracting data of a single colour of the second polychromatic image format to represent the image.

8. The apparatus of claim 7, comprising:

a controller to determine whether image data are monochromatic;

a converter to convert the image data into cyan, magenta, yellow, and black data when the image data are monochromatic;

a half-toning processor to compare colour information of the converted cyan, magenta, yellow, and black data with colour information which is previously set in halftone tables to output resultant values of cyan, magenta, yellow, and black; and

an extractor to extract the resultant value of black from among the generated resultant values of cyan, magenta, yellow, and black.

9. The apparatus as claimed in claim 8, wherein the controller is arranged to compare values of red (R), green (G), and blue (B) of the image data, and to determine that the image data are monochromatic when the R, G and B of the image data are equivalent.

10. The image forming apparatus as claimed in claim 8 or 9, wherein the half-toning processor is arranged to compare colour information on the converted cyan, magenta, yellow, and black data with colour information, which is previously set in a halftone table corresponding to black, to generate resultant values of cyan, magenta, yellow, and black.

11. The image forming apparatus as claimed in claim 10, wherein the extractor is arranged to delete the resultant values of cyan, magenta, and yellow from among the generated resultant values of cyan, magenta, yellow, and black to extract the resultant value of black.

FIG. 1

FIG. 2

| | R | G | B | R | G | B | R | G | B |
|---|---|---|---|---|---|---|---|---|---|
| 1 | 1 | 1 | 1 | 0 | 0 | 0 | 45 | 45 | 45 |
| 2 | 33 | 33 | 33 | 120 | 120 | 120 | 77 | 77 | 77 |
| 3 | 80 | 80 | 80 | 24 | 24 | 24 | 33 | 33 | 33 |
| 4 | 55 | 55 | 55 | 8 | 8 | 8 | 21 | 21 | 21 |
| 5 | 45 | 45 | 45 | 62 | 62 | 62 | 32 | 32 | 32 |
| 6 | 74 | 74 | 74 | 88 | 88 | 88 | 245 | 245 | 245 |
| 7 | 11 | 11 | 11 | 147 | 147 | 147 | 211 | 211 | 211 |
| 8 | 88 | 88 | 88 | 45 | 45 | 45 | 231 | 231 | 231 |
| 9 | 7 | 7 | 7 | 193 | 193 | 193 | 65 | 65 | 65 |

FIG. 3

|   | R | G | B | R | G | B | R | G | B |
|---|---|---|---|---|---|---|---|---|---|
| 1 | 3 | 3 | 3 | 125 | 7 | 8 | 42 | 15 | 120 |
| 2 | 4 | 25 | 7 | 35 | 125 | 42 | 64 | 43 | 193 |
| 3 | 47 | 180 | 88 | 35 | 35 | 35 | 211 | 34 | 88 |
| 4 | 55 | 0 | 255 | 8 | 52 | 147 | 164 | 78 | 39 |
| 5 | 40 | 40 | 40 | 43 | 253 | 182 | 40 | 92 | 49 |
| 6 | 125 | 52 | 110 | 42 | 154 | 133 | 147 | 240 | 143 |
| 7 | 53 | 14 | 118 | 48 | 84 | 114 | 255 | 0 | 0 |
| 8 | 10 | 87 | 241 | 48 | 77 | 75 | 123 | 52 | 168 |
| 9 | 120 | 25 | 196 | 35 | 0 | 0 | 151 | 194 | 152 |

# FIG. 4

# FIG. 5

FIG. 6

```
                        ┌──────────┐
                        │  START   │
                        └──────────┘
                              │
                              ▼                    500
                    ╱─────────────────╲
                   ╱  ARE RECEIVED IMAGE ╲          NO
                  ╱   DATA MONOCHROMATIC ? ╲──────────────────────┐
                   ╲                       ╱                      │
                    ╲─────────────────────╱                      │
                              │                                   │
                             YES                                  │
                              ▼                                   ▼
                  ┌─────────────────────┐            ┌─────────────────────┐
                  │ CONVERT IMAGE DATA  │            │ CONVERT IMAGE DATA  │
                  │ INTO CYAN, MAGENTA, │~510        │ INTO CYAN, MAGENTA, │~560
                  │ YELLOW, AND BLACK   │            │ YELLOW, BLACK DATA  │
                  │       DATA          │            │                     │
                  └─────────────────────┘            └─────────────────────┘
                              │                                   │
                              ▼             520                   ▼             570
                    ╱─────────────────╲                ╱─────────────────╲
                   ╱      COLOR         ╲              ╱       COLOR        ╲
                  ╱     INFORMATION      ╲            ╱     INFORMATION      ╲
                 ╱ ITEMS OF CYAN, MAGENTA,╲    NO    ╱  ITEMS OF CYAN,       ╲    NO
                ╱ YELLOW, AND BLACK DATA≧COLOR╲────┐╱ MAGENTA, YELLOW, AND    ╲────┐
                ╲ INFORMATION ITEMS ON       ╱    │╲ BLACK DATA≧COLOR INFORMATION╱  │
                 ╲ PREVIOUSLY SET           ╱     │ ╲ ITEMS ON HALFTONE TABLES ╱   │
                  ╲   HALFTONE            ╱       │  ╲ PREVIOUSLY SET BY      ╱     │
                   ╲   TABLES           ╱         │   ╲ BY RESPECTIVE      ╱       │
                    ╲─────────────────╱           │    ╲   COLORS        ╱         │
                         │                        │       ╲─────────────╱         │
                        YES    530                │          │                    │
                         ▼                        │         YES   580             │
         ┌─────────────────────┐  ┌────────────────┴───┐      ▼                   ▼
         │ OUTPUT AND STORE    │  │ OUTPUT AND STORE   │ ┌─────────────────┐ ┌─────────────────┐
         │ RESULTANT VALUE OF 1│  │ RESULTANT VALUE OF 0│ │ OUTPUT AND STORE│ │ OUTPUT AND STORE│
         └─────────────────────┘  └────────────────────┘ │RESULTANT VALUE OF 1│RESULTANT VALUE OF 0│
                     │                      540           └─────────────────┘ └─────────────────┘
                     ▼◄─────────────────────┘                  590
         ┌─────────────────────┐
         │ EXTRACT RESULTANT   │
         │ VALUE OF BLACK AMONG │
         │ STORED RESULTANT     │~550
         │ VALUES OF CYAN,      │
         │ MAGENTA, YELLOW,     │
         │ AND BLACK            │
         └─────────────────────┘
                     │
                     ▼
              ┌──────────┐
              │   END    │
              └──────────┘
```

FIG. 7